# EUROPEAN PATENT SPECIFICATION

(11) **EP 2 879 504 B1**
(45) Date of publication and mention of the grant of the patent: **12.10.2016**
(21) Application number: 13762278.3
(22) Date of filing: 01.08.2013
(51) Int. Cl.: A22C 9/00, A23L 13/70, A23B 4/03, A23B 4/023, A23B 4/16, A23B 4/20

(54) **METHOD FOR TENDERISING BOVINE MEAT**
VERFAHREN ZUM BEHANDELN VON RINDFLEISCH
PROCÉDÉ POUR TRAITER LA VIANDE BOVINE

(30) Priority: 03.08.2012 IT BO20120430; 27.02.2013 IT BO20130081
(43) Date of publication of application: 10.06.2015
(73) Proprietor: Olivari, Lorenzo, 40026 Imola (BO) (IT)
(72) Inventor: Olivari, Lorenzo, 40026 Imola (BO) (IT)
(74) Representative: Manzella & Associati
(86) International application number: PCT/IB2013/056320
(87) International publication number: WO 2014/020563

(56) References cited:
- WO-A1-01/76396
- US-A- 4 313 963
- US-A- 5 972 398
- US-A1- 2006 040 017
- US-A1- 2010 310 736

## Description

### Technical Field

The present invention concerns a method for treating bovine meat, in particular meat obtained from back cuts.

### Background Art

It has been known that the tenderness of meat, in particular of bovine meat, is a primary feature for the consumer when he chooses the product to eat. Such feature is specifically used for distinguishing the noble parts of the bovine, from the less noble ones.

The noble parts, such as for example the fillet, are generally obtained from back cuts. Such noble parts have a tenderness appreciated by consumers, but have the disadvantage of not being abundant, which entails high prices.

Vice versa, less noble parts are abundant, that is the front part of the bovine and some parts of the back cuts. Such cuts are substantially underestimated and thus they are sold with low prices since they are difficult to use in the catering field, because of their great size and of the presence of non-edible waste parts or difficult to work ones.

In particular, some less noble or less appreciated parts are obtained by some back cuts of the bovine, for example the parts known as rump or of the inner part of the hindquarters. Such parts are made by high organoleptic and quality value meat, but they suffer low consideration by operators of the specific field and by their clients, therefore they are sold with a price very inferior than their value, since, with their big size, they are difficult to work and because they comprise not completely edible parts.

It has long been tried to enhance less noble meat to confer on it the organoleptic properties and tenderness of highest quality.

For example, English patent GB 1,185,293 discloses a process for producing tender meat which provides to stack a plurality of pieces of meat, tendering the same without destroying their structure while holding back the natural juices, performing a plurality of incisions which extend through a substantial portion of each piece of meat, so as to improve the adhesion between the surfaces of the stacked pieces of meat, and shape said pieces of meat in a desired configuration.

U.S. patent US 4,337,275 discloses a meat product comprising a large slice of minced meat provided with a plurality of substantially parallel grooves on both faces.

These solutions generally have not found the favour of users, since they improve the visual appearance of the meat, with a scarce influence on their taste properties.

Other known methods include the use of products to be added to meat, for example proteins, particular enzymes, or more commonly marinades.

For example, patent application US 2006/040017 discloses a method for tendering meat which provides to treat a piece of meat with a mixture of enzymes comprising at least three different enzymes, among which is included the actinidine.

Nevertheless, such known methods are expensive, further to the nature of the product to be added, or may give the meat an added taste which, for certain types of consumption, is not appropriate.

Alternatively, methods have been developed for treatment of meat which do not provide the addition of synthetic products, but do provide the dry aging. Patent application U.S. 2010/310736 discloses a dry aging process which provides to arrange a plurality of pieces of meat in an environment with controlled temperature and moisture, for a predetermined time. In particular, in such controlled environment blocks of salt are prearranged to give treated meat more flavour.

Such a method, however, has a limited effect, because it allows to treat the meat only on the surface. In addition, to obtain a finished product of high quality, it is necessary to treat a piece of meat obtained from a cited noble cut.

### Disclosure of the invention

The task of the present invention is to solve the above mentioned problems, providing a method for treating bovine meat which allows to enhance pieces obtained from parts which are underestimated because they are difficult to work, such as rump or of the inner part of the hindquarters, so as to obtain a product with excellent organoleptic properties.

Within such task, it is a further scope of the present invention to provide a method which allows to obtain pieces of meat with a high ratio between quality and price.

Another scope of the invention is that of providing a method which allows to tender pieces of meat obtained from parts that are underestimated without adding products which can alter the taste.

A further scope of the invention is that of providing a method for treating meat which is simple to perform, surely reliable and of versatile use.

The cited scopes are attained, according to the present invention, by the method for treating bovine meat according to claim 1.

According to the present invention, the method provides to perform the dry aging of a fresh piece of bovine meat in a controlled environment, for a predetermined lapse of time, and thereafter operate a mechanical tendering of the dry aged piece of meat.

Suitably, such mechanical tendering is performed through a plurality of uniformly distributed piercings.

Suitably, such mechanical tendering provides a mechanical massage of the dry aged piece of meat.

Preferably, such piece of bovine met is obtained from a back cut, for example the rump or of the inner part of the hindquarters.

Preferably, between said dry aging step of the piece of fresh meat and said mechanical tendering step, a peeling step is provided for the cleaning of the external intramuscular membranes and fat.

Suitably, the method provides to perform a first tendering by or churning through mechanical massage and a further tendering by producing a plurality of uniformly distributed piercings.

The method further provides to apply on the piece of bovine meat a preservative product and to keep under vacuum the same piece of meat for a predetermined lapse of time, for letting the preservative product act.

Preferably, such preservative product is applied through immersion on the piece of meat for a predetermined lapse of time, and through the massage of the piece of meat for improving the absorption of the preservative product.

Preferably, further to the immersion, the piece of meat is let dripping.

Preferably, the preservative product comprises food oil.

Preferably, the preservative product comprises as well a suitable quantity of salt.

### Description of Drawings

Details of the invention shall be more apparent from the detailed description of a preferred embodiment of the method for treating bovine meat according to the invention, illustrated for indicative purposes in the attached drawings, wherein:

figure 1 shows a perspective schematic view of a piece of fresh bovine meat intended to be treated through the method according to the invention;

figure 2 shows a perspective view of a plurality of portions of homogeneous dimensions obtained from said piece of meat.

### Best Mode

With particular reference to such figures, a piece of fresh bovine meat intended to be treated through the method according to the invention, is indicated in its entirety with 1.

The method for treating bovine meat according to the present invention aims to enhance meat obtained from back cuts, in particular the rump or the inner part of the hindquarters of the bovine.

To this end, the piece 1 of fresh meat to be treated is prearranged, for example a piece of rump. Preferably a so called heart-shaped rump is chosen, characterized by a low level of internal fat. The rump is generally shaped so as to have two substantially opposite surfaces.

The rump is submitted to a dry aging step, that is a seasoning of the meat in a controlled environment, for a predetermined lapse of time. More specifically, such dry aging is carried out maintaining the rump in a cold environment, with a temperature preferably comprised between 0 and 0.5 °C, for a lapse of time comprised between five and seven days. The dry aging enables to tender the muscle and enhance its flavour.

It is to be noted that this dry aging step occurs without addition of additive products, that is in a completely natural way.

It is also to be noted that it is possible to provide that during the dry aging, the piece 1 of meat is placed under vacuum in a suitable package. Alternatively, it is also possible to provide that the piece of meat is simply left exposed to said controlled environment.

After the dry aging, the dry aged rump is submitted to a peeling step. By means of this peeling, the cleaning of the intramuscular membranes and external fat of the piece of meat is produced. The peeling is preferably performed with a machine, but it is possible to make it by hand. Anyway, it is to be observed that the peeling by hand produces a greater waste of parts.

If necessary, it is possible to provide a second cleaning step, called trimming or second cleaning, aimed to remove with a knife the waste parts not removed by the machine.

Then, a mechanical tendering step is performed for the cleaned piece 1 of meat. This operation is preferably performed by a machine of the type called "thousand needles", working on both sides of the piece 1 of meat. Obviously, such operation can also be carried out by apparatuses of different type, which are able to obtain the same result of meat tendering, for example by tendering machines of any type, by massaging machines or churns and the like. More specifically, the machine performs a first tendering or churning consisting in a mechanical massage of the whole piece 1 of meat, having the function of breaking the muscle fibres still in tension, and a second tendering, consisting in the production of a plurality of piercings uniformly distributed on the piece of meat.

It is to be noted that the piercing produces on the rump a series of holes which anyway will disappear during the following working steps described below.

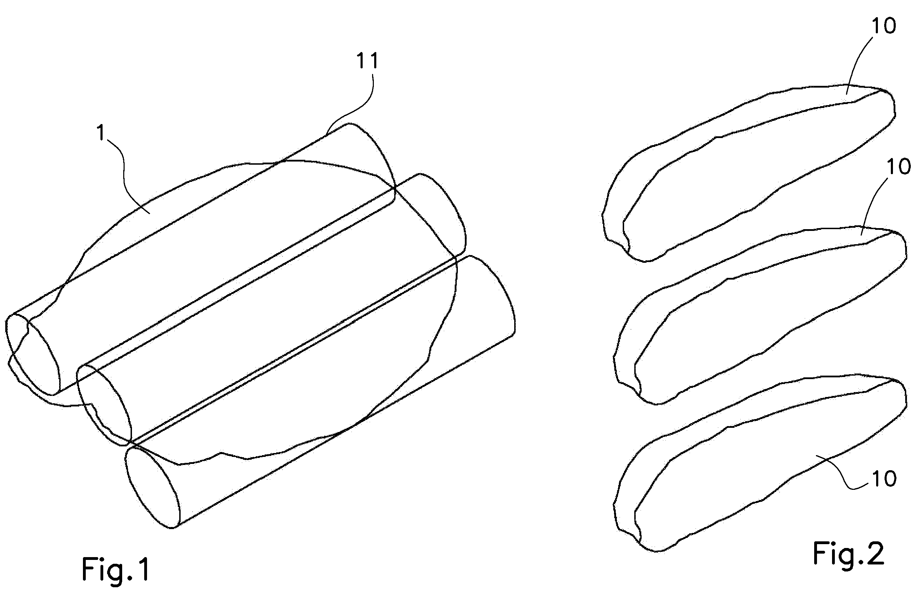

Further to the mechanical tendering step, the rump is cut with a knife so as to obtain portions 10 of homogeneous dimensions, suitable for sale (see figure 2). Such portions 10 of homogeneous dimensions can be obtained for example by performing the cutting of the rump in cylindrical parts, as it is schematically indicated with the lines 11 in figure 1.

Nevertheless, it is possible to cut the rump in parts of different shape, for example having conical shape, according to the shape and the size of the piece 1 of fresh bovine meat.

In the illustrated case, the piece of bovine meat results divided into two parts 10, but it is obviously possible to provide a different number of portions according to dimensions and/or weight of the portions which are required, and according to dimensions and /or weight of the piece of meat before the cut step.

It is important that the cutting is performed according to the direction of the muscle, so as to avoid contractions or curls of the meat during cooking.

It is to be noted that it is possible that the cutting step with a knife is performed before the mechanical tendering step.

The cut portions 10 are then submitted to a treating step aimed to ensure the preservation.

According to a first embodiment, such preservation step provides to apply on the meat a suitable preservative product and to keep the meat under vacuum for a predetermined lapse of time, for allowing the preservative product to act.

More specifically, according to such embodiment, the preservation step provides to arrange the cut portions of rump inside a suitable container, on which the preservative product has already been sprayed. The container preferably consists of a tank of stainless steel. The preservative product is as well applied directly on meat. The preservative product is suitably made of a solution of demineralised water with addition of nitrites and nitrates.

According to a second embodiment, the preservation step provides to submerge portions 10 of rumps inside a tank filled with a preservative product. The same rump portions are then left in immersion inside the preservative product for a predetermined immersion time.

Then a massage of the portions 10 of rump is performed, for allowing a better absorption of the preservative product. Such a massage allows as well to limit, in the following steps of preservation and cooking, the loss of liquids contained in natural way inside the rump, in order to obtain a better tendering of the rump pieces, and better taste properties.

According to this second embodiment, the preservative product preferably comprises food oil. Usefully a suitable quantity of salt is added to the food oil. Such preservative product offers the double advantage of permitting the preservation of the rump portions, as well as of improving the taste properties of the same. Another advantage of this preservative product is that of being totally natural and genuine.

In particular, the preferred oil is extra virgin olive oil, but it is obviously possible to use another type of oil according to the organoleptic exigencies. As an alternative, it is also possible to provide the use of the above mentioned preservative product, that is the solution of demineralised water with addition of nitrites and nitrates.

At the end of the above mentioned predetermined lapse of time, the rump portions are taken off the preservative product ant let dripping for eliminating the preservative product in excess.

The rump portions are then placed under vacuum and kept under vacuum for a predetermined lapse of time. This enables the preservative product to have an efficient effect. Preferably, such lapse of time is not less of two days. At the end of such step, the obtained rump portions have a very appreciable aspect to consumers.

For an optimal result, meat portions are submitted to a further dry aging step, for example for a lapse of time comprised between five and seven days, before being sold.

It is important to note that all steps of the present invention occur in an aseptic environment. The sterility of the environment affects the shelf life of the meat to be sold. Such sell-by date is generally comprised between fifteen and thirty days.

The described method attains the scope of enhancing pieces of bovine meat obtained from less estimated parts, such as in particular back cuts, so as to obtain a product having excellent organoleptic properties.

A characteristic of the method object of the invention consists in the fact that it allows to prearrange for sale portions of bovine meat coming from less estimated parts, having in particular a tenderness which can be compared to the tenderness of meat obtained from noble parts of the bovine, thus giving the treated piece of meat an optimal ratio between quality and price.

It is to be noted that the described method allows to tender meat without adding additional substances, of the type of proteins and enzymes, thus avoiding an increase of production costs, and without providing a marination step, allowing to preserve the taste of bovine meat.

The described method allows moreover to cook the meat by any existing cooking method, similarly to any fresh product, thus obtaining the best after cooking result.

To such end, it is to be noted that the organoleptic properties of treated meat can be further improved, according to the method object of the invention, by providing an additional dry aging step further to the application of the preservative product.

Another characteristic of the method is to apply the preservative solution by spraying, permitting to minimize the quantity of preservative solution.

A further characteristic of the method object of the invention is that of submerging the pieces of meat in a preservative product, preferably comprising food oil, and to perform the massage for easing a better absorption of the preservative product. Improving the absorption of the preservative product allows to plan a submersion time so short as to avoid an excessive absorption. For example, in case the meat is immersed in an oil solution, the massage prevents from obtaining a meat in oil.

Moreover, such massage has the advantage to limit the loss of naturally contained liquids during following storing or cooking steps.

It is to be noted that the use of oil and salt permits a better preservation of meat and then a greater shelf life of the same, while avoiding the use of chemical substances such for example nitrites and nitrates.

The method in object provides as well to arrange the piece of meat, once applied the preservative solution, under vacuum for at least two days. Such vacuum keeping enables the preservative product to act.

The method described for indicative purpose is susceptible of numerous modifications and variants according to different exigencies.

For example, in case it is used for treating other kinds of bovine meat such as the inner part of the hindquarters, preferably choosing the so called heart-shape of it, after the cited dry aging step the piece of meat is divided into the three main muscles which compose it. More specifically, the first part to be divided is the closest to the femur of the animal. Such part is generally considered less valuable than the other two main muscles and can become, at the end of the treatment, a second choice product.

Subsequently, the most valuable part of the the heart-shaped part of the hindquarters is divided into the two main muscles.

The three obtained muscles are submitted to the cited peeling step, through which the cleaning of the external intramuscular membranes and external fat of the piece of meat is performed. Also in this case, it is possible to provide a further step of trimming or second peeling, aimed to take off with a knife the waste parts not removed by the machine.

Then, the mechanical tendering, cut by knife and preservation steps are performed, according to the method object of the invention, as previously described. For example, the two first choice muscles can be divided into four equal parts, before being submitted to the cited preservation treatments.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Method for treating bovine meat, in particular obtained from back cuts, **characterized in that** it comprises the steps of
a. prearranging a piece (1) of fresh bovine meat made of rump or of the inner part of the hindquarters;
b. performing the dry aging of said piece (1) of fresh bovine meat in a controlled environment for a predetermined lapse of time;
c. performing a mechanical tendering of the dry aged piece of meat; said mechanical tendering providing a mechanical massage of the dry aged piece of meat;
d. performing the cutting with a knife of the dry aged and tendered piece of meat in a plurality of portions (10) of homogeneous dimensions;
e. applying on said portions (10) of meat a preservative product;
f. keeping under vacuum said portions (10) of meat for a predetermined lapse of a time, for letting such preservative product act.

2. Method according to claim 1, **characterized in that** said step e. of applying said preservative product comprises the steps of:
e1. immersing said portions (10) of meat in said preservative product;
e2. letting said portions (10) of meat immersed for a predetermined lapse of immersion time;
e3. performing the massage of said portions (10) of meat for improving the absorption of said preservative product;
e4. further to said lapse of immersion time, extracting said portions (10) of meat from said preservative product.

3. Method according to claim 2, **characterized in that** it provides the further step of e5. letting said portions (10) of meat drip for eliminating the exceeding preservative product.

4. Method according to one of the previous claims, **characterized in that** said preservative product comprises food oil.

5. Method according to claim 4, **characterized in that** said preservative product comprises as well a suitable quantity of salt.

6. Method according to claim 4 or 5, **characterized in that** said oil is olive oil.

7. Method according to claim 6, **characterized in that** said olive oil is extra virgin olive oil.

8. Method according to any of previous claims, **characterized in that** said mechanical tendering of the dry aged piece of meat is performed through a plurality of uniformly distributed piercings.

9. Method according to claim 1 or 8 when dependent on any of claims 1 to 3 **characterized in that** said preservative product is made of a solution of demineralised water with the addition of nitrites and nitrates.

10. Method according to claim 9, **characterized in that** said preservative solution is applied through spraying.

11. Method according to any claim 1 to 8, **characterized in that** said dry aging is performed by keeping said piece of fresh meat at a temperature comprised between 0 and 0.5°C for a lapse of time comprised between five and seven days.

12. Method according to any claim 1 to 8, **characterized in that** between said dry aging of the piece of fresh meat and said mechanical tendering a peeling step is provided for performing the cleaning of the external intramuscular membranes and fat.

## Patentansprüche

1. Verfahren zur Behandlung von Rindfleisch, insbesondere des aus den hinteren Stücken gewonnenen, **dadurch gekennzeichnet, dass** es folgende Phasen umfasst:
a. Vorbereitung eines frischen aus der Hüfte oder dem inneren Teil der Hinterviertel gewonnenen Rindfleischstückes (1):
b. Trockenreifung des genannten frischen Rindfleischstückes (1) in einer kontrollierten Umgebung für eine vorbestimmte Zeitdauer;
c. Durchführung einer mechanischen Zartmachung des trockengereiften Fleischstückes, wobei die genannte mechanische Zartmachung für eine mechanische Massage des trockengereiften Fleischstückes sorgt;
d. Ausführung des Schneidens des trockengereiften und zart gemachten Fleischstückes in einer Mehrzahl von gleich große Portionen (10) mit dem Messer;
e. Auftragen eines Konservierungsmittels auf die genannten Fleischportionen (10);
f. Aufbewahrung der genannten Fleischportionen (10) für eine vorbestimmte Zeitdauer unter Vakuum, damit das Konservierungsmittel wirken kann.

2. Verfahren nach Anspruch 1, **dadurch gekennzeichnet, dass** die genannte Phase e., bei der das genannte Konservierungsmittel angewendet wird, folgende Phasen umfasst:
e1. Eintauchen der genannten Fleischportionen (10) in das genannte Konservierungsmittel;
e2. Eingetauchtlassen der genannten Fleischportionen (10) für eine vorbestimmte Eintauchzeitdauer;
e3. Ausführung der Massage der genannten Fleischportionen (10) zur Verbesserung der Aufnahme des genannten Konservierungsmittels;
e4. nach der genannten Eintauchzeitdauer, Herausnahme der genannten Fleischportionen (10) aus dem genannten Konservierungsmittel.

3. Verfahren nach Anspruch 2, **dadurch gekennzeichnet, dass** es die weitere Phase von e5. liefert, indem man die genannten Fleischportionen (10) abtropfen lässt, um das überschüssige Konservierungsmittel zu entfernen.

4. Verfahren nach einem der vorhergehenden Ansprüche, **dadurch gekennzeichnet, dass** das genannte Konservierungsmittel Speiseöl enthält.

5. Verfahren nach Anspruch 4, **dadurch gekennzeichnet, dass** das genannte Konservierungsmittel auch eine angemessene Menge Salz enthält.

6. Verfahren nach Anspruch 4 oder 5, **dadurch gekennzeichnet, dass** das genannte Öl Olivenöl ist.

7. Verfahren nach Anspruch 6, **dadurch gekennzeichnet, dass** das genannte Olivenöl natives Olivenöl extra ist.

8. Verfahren nach einem der vorhergehenden Ansprüche, **dadurch gekennzeichnet, dass** die genannte mechanische Zartmachung des trockengereiften Fleischstückes durch eine Mehrzahl von gleichmäßig verteilten Einstichen ausgeführt wird.

9. Verfahren nach Anspruch 1 oder 8, falls von einem der Ansprüche 1 bis 3 abhängig, **dadurch gekennzeichnet, dass** das genannte Konservierungsmittel aus einer entmineralisierten Wasserlösung mit Nitrit- und Nitratzusätzen besteht.

10. Verfahren nach Anspruch 9, **dadurch gekennzeichnet, dass** die genannte Konservierungslösung durch Sprühen aufgetragen wird.

11. Verfahren nach einem der Ansprüche 1 bis 8, **dadurch gekennzeichnet, dass** die genannte Trockenreifung durchgeführt wird, indem das genannte frische Fleischstück für eine Zeitdauer zwischen fünf und sieben Tagen bei einer Temperatur zwischen 0 und 0,5 °C aufbewahrt wird.

12. Verfahren nach einem der Ansprüche 1 bis 8, **dadurch gekennzeichnet, dass** zwischen der genannten Phase der Trockenreifung des frischen Fleischstückes und der genannten mechanischen Zartmachung eine Schälphase geliefert wird, um die Säuberung der externen Membranen zwischen den Muskeln und des Fetts durchzuführen.

## Revendications

1. Méthode pour le traitement de viande bovine, en particulier obtenue de pièces des coupes arrière, **caractérisée en ce qu'**elle comprend les phases de :
a. préparation d'une pièce (1) de viande bovine fraîche constituée de rumsteck ou de la partie intérieure des quartiers arrière ;
b. exécution de la maturation à sec de ladite pièce (1) de viande bovine fraîche sous environnement contrôlé pendant un laps de temps prédéterminé ;
c. exécution d'un ramollissement mécanique de la pièce de viande objet de la maturation à sec ; ledit ramollissement mécanique fournissant un massage mécanique de la pièce de viande objet de la maturation à sec ;
d. exécution de la découpe au couteau de la pièce de viande objet de la maturation à sec et ramollie en plusieurs morceaux (10) de dimensions homogènes ;
e. application d'un produit conservateur sur lesdits morceaux (10) de viande ;
f. conservation sous vide desdits morceaux (10) de viande pendant un laps de temps prédéterminé, afin de permettre au produit conservateur d'agir.

2. Méthode selon la revendication 1, **caractérisée en ce que** la phase susdite e. d'application dudit produit conservateur comprend les phases de :
e1. Immersion desdits morceaux (10) de viande dans ledit produit conservateur ;
e2. Laisser lesdits morceaux (10) de viande immergée pendant un laps de temps prédéterminé ;
e3. Exécution du massage desdits morceaux (10) de viande pour améliorer l'absorption dudit produit conservateur ;
e4. Après ledit laps de temps d'immersion, retrait desdits morceaux (10) de viande dudit produit conservateur.

3. Méthode selon la revendication 2, **caractérisée en ce qu**'elle fournit la phase suivante e5. en laissant égoutter lesdits morceaux (10) de viande pour éliminer le produit conservateur en excès.

4. Méthode selon l'une des revendications précédentes, **caractérisée en ce que** ledit produit conservateur contient de l'huile alimentaire.

5. Méthode selon la revendication 4, **caractérisée en ce que** ledit produit conservateur contient aussi une quantité opportune de sel.

6. Méthode selon la revendication 4 ou 5, **caractérisée en ce que** ladite huile est de l'huile d'olive.

7. Méthode selon la revendication 6, **caractérisée en ce que** ladite huile d'olive est une huile d'olive vierge extra.

8. Méthode selon l'une quelconque des revendications précédentes, **caractérisée en ce que** ledit ramollissement mécanique de la pièce de viande objet de la maturation à sec est effectué au moyen de plusieurs piqûres distribuées uniformément.

9. Méthode selon la revendication 1 ou 8 si dépendant de l'une quelconque des revendications de 1 à 3, **caractérisée en ce que** ledit produit conservateur est constitué d'une solution d'eau déminéralisée à laquelle ont été ajoutés des nitrites et des nitrates.

10. Méthode selon la revendication 9, **caractérisée en ce que** ladite solution de conservation est appliquée par pulvérisation.

11. Méthode selon l'une quelconque des revendications de 1 à 8, **caractérisée en ce que** ladite maturation à sec est effectuée en gardant ladite pièce de viande fraîche à une température comprise entre 0 et 0,5 °C pendant un laps de temps allant de cinq à sept jours.

12. Méthode selon l'une quelconque des revendications de 1 à 8, **caractérisée en ce qu**'entre ladite maturation à sec de la pièce de viande fraîche et ledit ramollissement mécanique est fournie une phase d'épluchage pour effectuer le nettoyage des membranes intramusculaires extérieures et du gras.
